# EUROPEAN PATENT SPECIFICATION

(11) **EP 4 086 921 B1**
(45) Date of publication and mention of the grant of the patent: **30.10.2024**
(21) Application number: 21876722.6
(22) Date of filing: 25.11.2021
(51) Int. Cl.: G21B 1/13

(54) **CLOSED V-SHAPED ACUTE ANGLE STRUCTURE OF DIVERTER FIRST WALL**
GESCHLOSSENE V-FÖRMIGE SPITZWINKELSTRUKTUR EINER ERSTEN WAND EINES ABLENKERS
STRUCTURE D'ANGLE AIGU EN FORME DE V FERMÉE DE PREMIÈRE PAROI DE DÉFLECTEUR

(30) Priority: 09.03.2021 CN 202110255401
(43) Date of publication of application: 09.11.2022
(73) Proprietor: Hefei Institutes of Physical Science, Chinese Academy of Sciences, Hefei, Anhui 230031 (CN)
(72) Inventor: SONG, Yuntao, Hefei Anhui 230031 (CN); PENG, Xuebing, Hefei Anhui 230031 (CN); LIU, Peng, Hefei Anhui 230031 (CN); FENG, Siqing, Hefei Anhui 230031 (CN); MAO, Xin, Hefei Anhui 230031 (CN); QIAN, Xinyuan, Hefei Anhui 230031 (CN); SONG, Wei, Hefei Anhui 230031 (CN)
(74) Representative: Vitina, Maruta
(86) International application number: PCT/CN2021/132947
(87) International publication number: WO 2022/188461

(56) References cited:
- CN-A- 104 416 973
- CN-A- 108 615 563
- CN-A- 110 729 058
- CN-A- 112 420 221
- CN-A- 112 420 221
- CN-A- 112 927 823
- JP-A- S59 151 084
- HIRAI T ET AL: "ITER divertor materials and manufacturing challenges", FUSION ENGINEERING AND DESIGN, ELSEVIER SCIENCE PUBLISHERS, AMSTERDAM, NL, vol. 125, 19 July 2017 (2017-07-19), pages 250 - 255, XP085305440, ISSN: 0920-3796, DOI: 10.1016/J.FUSENGDES.2017.07.009
- PENG XUEBING, YE MINYOU, SONG YUNTAO, MAO XIN, CHEN PEIMING, QIAN XINYUAN: "Engineering conceptual design of CFETR divertor", FUSION ENGINEERING AND DESIGN, ELSEVIER SCIENCE PUBLISHERS, AMSTERDAM., NL, vol. 98-99, 1 October 2015 (2015-10-01), NL , pages 1380 - 1383, XP055939631, ISSN: 0920-3796, DOI: 10.1016/j.fusengdes.2015.01.017

## Description

### TECHNICAL FIELD

This application relates to divertors of tokamak fusion devices, and more particularly to a closed V-shaped acute-angle structure for a first wall of a divertor.

### BACKGROUND

As a core component inside the tokamak fusion device, a first wall of a divertor is required to withstand the bombardment of high-energy particles from the plasma core. In this case, a heat load ranging from several MW/m² to tens of MW/m² will be formed on the surface. The generated energy will be removed through the inner cooling water flow, otherwise will affect the normal operation of the divertor, and may even lead to a failure.

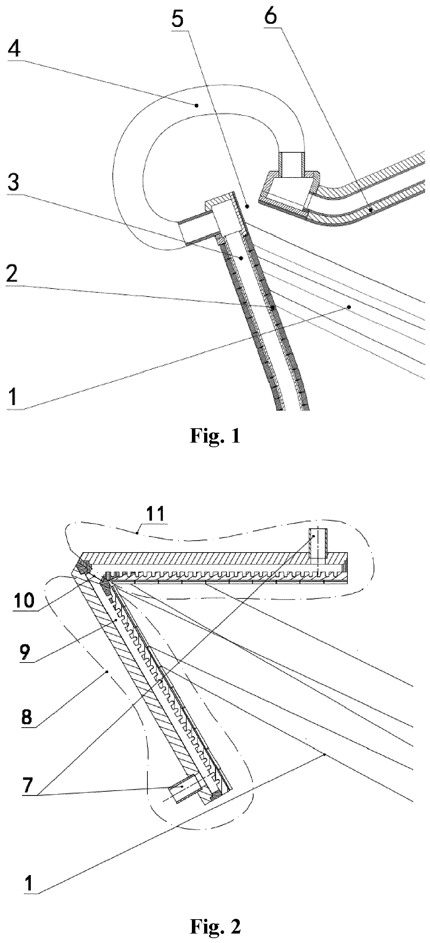

At present, most divertors, such as International Thermonuclear Experimental Reactor (ITER) divertor, adopt a separate first wall (as shown in Fig. 1) mostly, which often includes inner target, inner reflector plate, dome, outer reflector plate and outer target. For other diverters, such as Experimental Advanced Superconducting Tokamak (EAST) divertor, their first walls are commonly designed based on the above structure. Individual parts of the separate structure need to be connected via the inlet and outlet water joints (water cassette), and then a cooling water loop is enabled to cool the components. Due to the intersection with the scrape-off layer (region between the last closed flux surface and the last open flux surface of the plasma region), the target is subjected to high heat load. Moreover, since the plasma configuration is unstable during operation, the bombardment caused by the high-energy particles will be likely to be transmitted to the water joints (water cassette). Unfortunately, due to the poor heat transfer capacity, the water joints (water cassette) are inferior to the target in the heat load bearing capacity, failing to withstand the heat load generated by the bombardment of the plasma. Therefore, it is prone to result in the end effect, thereby making it not conducive to the flexible adjustment of the plasma configuration.

There is known [Hirai T. et al.: "ITER divertor materials and manufacturing challenges", Fusion Engineering and Design, ELSEVIER SCIENCE PUBLISHERS, vol. 125, 19 July 2017, pages 250-255, XP085305440, ISSN: 0920-3796, DOI: 10.1016/J.FUSENGDES,2017,07,009] provides a meticulous examination of factors integral to the optimization of divertor performance within the context of sustainable and efficacious fusion technologies. The absence of a detailed exploration of specific material and manufacturing solutions diminishes the practical applicability of the findings.

There is also known a patent application [CN112420221A] wherein is disclosed fusion reactor divertor structure for front remote operation and maintenance. It comprises a plasma facing component with inner and outer target plate areas, and a box body support with a main cooling water pipe.

### SUMMARY

In view of the defects in the prior art, some structural optimizations have been made to the first wall of the diverter, and a closed V-shaped acute-angle structure for the first wall is provided herein, in which the channels are removed to avoid the end effect. The target has the same structure parameters with the reflector plate, such that they share the same heat transfer capacity in the V-shaped acute-angle region, satisfying the flexible adjustment of the plasma configuration and enhancing the operation safety of the device.

Technical solutions of this application are described as follows.

In an embodiment, a closed V-shaped acute-angle structure for a first wall of a divertor for tokamak fusion devices, comprising:
a target;
a reflector plate; and
a cooling water pipe;
wherein the target and the reflector plate both have a flat-plate structure, and each comprises a tungsten layer, a copper layer, a chromium-zirconium-copper layer, a stainless-steel layer and a stainless-steel cover plate connected in sequence; the chromium-zirconium-copper layer, the stainless-steel layer and the stainless-steel cover plate are combined to form a heat sink; the chromium-zirconium-copper layer and the stainless-steel layer inside the heat sink form a HyperVapotron cooling water channel; and the cooling water pipe is communicated with the HyperVapotron cooling water channel to form a cooling water channel; wherein the target and the reflector plate are butt welded to form the closed V-shaped acute-angle structure to allow flexible adjustment and control of plasma strike points between the target and the reflector plate, so as to enable flexible adjustment of plasma configuration.

In an embodiment, the target and the reflector plate are the same in structure and parameter of each layer, such that the target and the reflector plate have the same heat transfer capacity, so as to satisfy the requirement of heat load capacity in the plasma strike-point area under different plasma configurations. The tungsten layer is configured to be exposed to plasma; the copper layer is configured as a transition layer; the chromium-zirconium-copper layer is configured as a heat transfer layer; the stainless-steel layer is configured as a structural layer; and the stainless-steel cover plate is configured as a cover plate for the HyperVapotron cooling water channel.

In an embodiment, tungsten layers of the target and the reflector plate are located at an inner side of the closed V-shaped acute-angle structure, and have an overlapping area at a root of the closed V-shaped acute-angle structure so as to ensure that a plasma strike-point area is fully covered by the tungsten layer to allow the plasma to be completely intercepted by the tungsten layer.

In an embodiment, the HyperVapotron cooling water channel covers the chromium-zirconium-copper layer, the stainless-steel layer and the stainless-steel cover plate. At a chromium-zirconium-copper layer side in a welding area of the closed V-shaped acute-angle structure, the HyperVapotron cooling water channel experiences a transition in a sequence of the chromium-zirconium-copper layer-a chromium-zirconium-copper and stainless-steel mixed layer-the stainless-steel layer. The stainless-steel cover plate and the stainless layer are sealedly welded to form the complete HyperVapotron cooling water channel. A plurality of grooves are provided inside the chromium-zirconium-copper layer and the stainless-steel layer. The chromium-zirconium-copper layer and the stainless-steel layer are composite panels pre-formed by related processes (e.g., explosive welding), and then are processed to form the plurality of grooves inside, wherein the chromium-zirconium-copper layer is configured for heat transfer, and the stainless-steel layer is configured to provide structural strength. The above designed transition from the chromium-zirconium-copper layer to the stainless-steel layer in the welding area can effectively avoid the occurrence of welding defects between different materials. Moreover, the welding between the pure stainless-steel layers can enhance the welding strength of interfaces between the target and the reflector plate.

In an embodiment, the target and the reflector plate are butt welded by a one-step butt-welding forming which contains welding of stainless-steel layers of the target and the reflector plate, welding of the stainless-steel cover plate and the stainless-steel layer, the welding of the cooling water pipe and the stainless-steel cover plate and welding of the tungsten-copper sheet and the chromium-zirconium-copper layer. The tungsten copper sheet comprising the tungsten layer and the copper layer has been pre-formed via other processes (e.g., casting).

In an embodiment, the welding area is a welding interface formed by butt welding between stainless-steel layers of the target and the reflector plate. The welding interface has a boss and a recess matched with each other, which are strictly controlled in terms of the tolerance. A mutually matching boss-recess structure is also suitable for welding interfaces between the stainless-steel cover plate and the stainless-steel layer and welding interfaces between the cooling water pipe and the stainless-steel cover plate. The mutually matching boss-recess structure is intended to improve the positioning accuracy of assembly and enhance the welding strength.

Compared with the prior art, this application has the following beneficial effects.

Regarding the closed V-shaped acute-angle structure designed herein, the end effect is effectively eliminated, and thus the operation safety of the whole device is enhanced. The target and the reflector plate have the same heat transfer capacity to enable the flexible adjustment and control of the plasma strike points between the target and the reflector plate, so as to satisfy the flexibility requirement of the plasma configuration, promoting the physical research on the exploration and development of advanced divertors. In addition, the closed V-shaped acute-angle structure is more conducive to obtaining the operation mode of the radiative divertor, and reducing the heat load on the target. The internal HyperVapotron cooling water channel improves the heat transfer efficiency and significantly enhances the heat load capacity.

### BRIEF DESCRIPTION OF THE DRAWINGS

Fig. 1 schematically illustrates a structure for a first wall of a divertor in the prior art;
Fig. 2 is a sectional view of a V-shaped acute-angle structure for a first wall of a divertor according to an embodiment of this application;
Fig. 3 is an exploded view of the first wall of the divertor according to an embodiment of this application; and
Fig. 4 is a partial structural diagram of the first wall shown in Fig. 2.

In the drawings: 1: plasma configuration line; 2: target; 3: cooling water channel; 4: corrugated connection pipe; 5: channel; 6: dome; 7: cooling water pipe; 8: target; 81: tungsten layer; 82: copper layer; 83: chromium-zirconium-copper layer; 84: stainless-steel layer; 841: groove; 842: first boss; 85: stainless-steel cover plate; 851: second boss; 9: HyperVapotron cooling water channel; 10: welding interface; 11: reflector plate; and 12: overlapping area.

### DETAILED DESCRIPTION OF EMBODIMENTS

With reference to the accompanying drawings and embodiments of this application, the technical solutions of the present application will be clearly and completely described below. Obviously, described below are merely some embodiments of the present application, which are not intended to limit the application. Other embodiments obtained by those of ordinary skill in the art based on these embodiments without paying creative effort shall fall within the scope of the present application.

Referring to an embodiment shown in Fig. 2, a closed V-shaped acute-angle structure for a first wall of a divertor is proposed, including a target 8, a reflector plate 11, a stainless-steel cooling water pipe 7, and the like. The target 8 and the reflector plate 11 are butt welded to form the V-shaped acute-angle structure. The target 8 and the reflector plate 11 are each processed to have a HyperVapotron cooling water channel 9 inside. The cooling water pipe 7 is communicated with the HyperVapotron cooling water channel 9 to form a cooling water channel system inside the first wall.

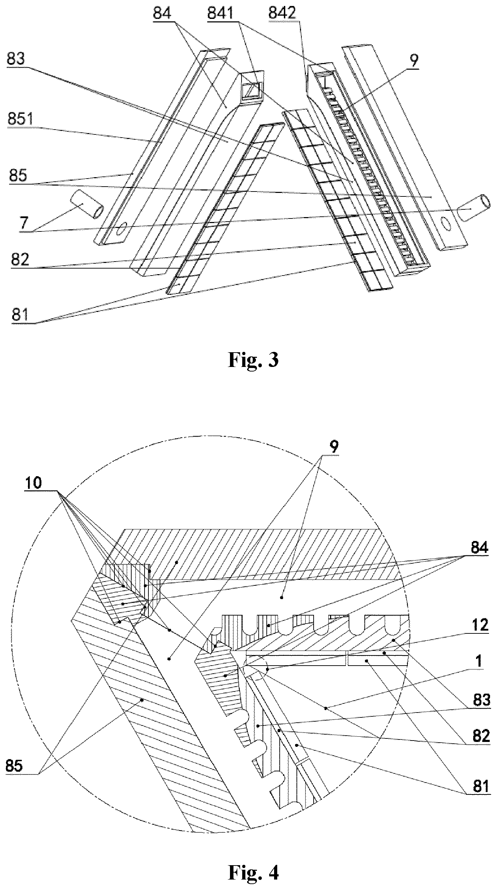

An exploded diagram of the closed V-shaped acute-angle structure is shown in Fig. 3. Each of the target 8 and the reflector plate 11 includes a tungsten layer 81, a copper layer 82, a chromium-zirconium-copper layer 83, a stainless-steel layer 84 and a stainless-steel cover plate 85 connected in sequence. The tungsten layers 81 of the target 8 and the reflector plate 11 are located at an inner side of the V-shaped acute-angle structure. High-energy particles bombard the tungsten layer 81 within the range covered by the plasma configuration line 1. A generated heat is conducted to the tungsten layer 81 through the copper layer 82, as a transition layer, to the chromium-zirconium-copper layer 83 and taken away by a flowing cooling liquid in the HyperVapotron cooling water channel 9.

The HyperVapotron cooling water channel 9 is covered with the chromium-zirconium-copper layer 83, the stainless-steel layer 84 and the stainless-steel cover plate 85. The chromium-zirconium-copper layer 83 and the stainless-steel layer 84 are fixedly connected by explosion welding. At the same time, a plurality of grooves are provided inside the chromium-zirconium-copper layer 83 and the stainless-steel layer 84. The chromium-zirconium-copper layer 83 enables to quickly conduct heat to the cooling liquid in the HyperVapotron cooling water channel 9. The stainless-steel layer 84 is configured to provide structural strength.

Referring to an embodiment shown in Fig. 4, in a welding area of the V-shaped acute-angle structure, on a side of the chromium-zirconium-copper layer 83, the HyperVapotron cooling channel 9 experiences a transition in a sequence of the chromium-zirconium-copper layer 83-chromium-zirconium-copper layer and stainless-steel mixed layer-pure stainless-steel layer 84 to ensure that the target 8 is welded with the reflector plate 11 via the welding between the pure stainless-steel layers 84, avoiding welding defects between different materials and improving the welding strength. A welding interface 10 between the stainless-steel layers 84 is processed into a structure of a first boss 842 and a groove 841 matched with each other, and the processing accuracy is strictly controlled, which facilitates the improvement of positioning accuracy during the welding of assembly and the enhancement of the welding strength. The mutually matching boss-recess structure is also suitable for welding interfaces between the stainless-steel cover plate 85 and the stainless-steel layer 84 and welding interfaces between the cooling water pipe 7 and the stainless-steel cover plate 85.

At a root of the V-shaped acute-angle structure, when assembling before welding, the tungsten layers 81 of the target 8 and the reflector plate 11 have a partial overlapping area 12 in a transmission direction of the plasma configuration line 1 to ensure high-energy particles running along the plasma configuration line 1 to be completely intercepted by the tungsten layer 81.

With regard to the closed V-shaped acute-angle structure for the first wall of the divertor provided herein, both of the target 8 and the reflector plate 11 have the same heat transfer capacity, and the plasma strike points can be flexibly adjusted and controlled between the target 8 and the reflector plate 11, satisfying the flexibility requirement of plasma configuration, and promoting the exploration and development of the physical research on advanced divertors.

The above embodiments are merely illustrative to facilitate the understanding of the disclosure, and are not intended to limit the scope of the disclosure. Any changes, modifications and replacements made by those of ordinary skill in the art without departing from the spirit of the application should fall within the scope of the application defined by the appended claims.

## Claims

1. A closed V-shaped acute-angle structure for a first wall of a divertor for tokamak fusion devices, comprising:
a target (8);
a reflector plate (11); and
a cooling water pipe (7);
wherein the target (8) and the reflector plate (11) both have a flat-plate structure, and each comprises a tungsten layer (81), a copper layer (82), a chromium-zirconium-copper layer (83), a stainless-steel layer (84) and a stainless-steel cover plate (85) connected in sequence; the chromium-zirconium-copper layer, the stainless-steel layer and the stainless-steel cover plate (85) are combined to form a heat sink; the chromium-zirconium-copper layer and the stainless-steel layer inside the heat sink form a HyperVapotron cooling water channel (9); and the cooling water pipe (7) is communicated with the HyperVapotron cooling water channel (9)to form a cooling water channel;
**characterized in that** the target (8) and the reflector plate (11) are butt welded to form the closed V-shaped acute-angle structure to allow flexible adjustment and control of plasma strike points between the target (8) and the reflector plate (11), so as to enable flexible adjustment of plasma configuration.

2. The closed V-shaped acute-angle structure according to claim 1, **characterized in that** the target (8) and the reflector plate (11) are the same in structure and parameter of each layer, such that the target (8) and the reflector plate (11) have the same heat transfer capacity; the tungsten layer (81) is configured to be exposed to the plasma; the copper layer (82) is configured as a transition layer; the chromium-zirconium-copper layer (83) is configured as a heat transfer layer; the stainless-steel layer (84) is configured as a structural layer; and the stainless-steel cover plate (85) is configured as a cover plate for the HyperVapotron cooling water channel (9).

3. The closed V-shaped acute-angle structure according to claim 1, **characterized in that** a contact interface between the chromium-zirconium-copper layer (83) and the stainless-steel layer (84) is a curved surface in a welding area of the closed V-shaped acute-angle structure; and at a chromium-zirconium-copper layer (83) side in the heat sink, the HyperVapotron cooling water channel experiences a transition in a sequence of the chromium-zirconium-copper layer-a chromium-zirconium-copper and stainless-steel mixed layer-the stainless-steel layer.

4. The closed V-shaped acute-angle structure according to claim 1, **characterized in that** tungsten layers of the target and the reflector plate are located at an inner side of the closed V-shaped acute-angle structure, and have an overlapping area at a root of the closed V-shaped acute-angle structure along a transmission direction of a plasma configuration line, so as to ensure that a plasma strike-point area is fully covered by the tungsten layer to allow the plasma to be completely intercepted by the tungsten layer.

5. The closed V-shaped acute-angle structure according to claim 1, **characterized in that** the target and the reflector plate are butt welded by a one-step butt-welding forming by welding of stainless-steel layers of the target and the reflector plate, welding of the stainless-steel cover plate (85) and the stainless-steel layer, welding of the cooling water pipe and the stainless-steel cover plate (85) and welding of a tungsten-copper sheet and the chromium-zirconium-copper layer.

6. The closed V-shaped acute-angle structure according to claim 3, **characterized in that** the welding area is a welding interface formed by butt welding between stainless-steel layers of the target (8) and the reflector plate (11); the welding interface has a boss and a recess matched with each other; welding interfaces between the stainless-steel cover plate (85) and the stainless-steel layer (84) and welding interfaces between the cooling water pipe (7) and the stainless-steel cover plate (85) all form a mutually matching boss-recess structure for butt welding.

7. The closed V-shaped acute-angle structure according to claim 1, **characterized in that** the stainless-steel cover plate (85) and the stainless layer are sealedly welded to form the complete HyperVapotron cooling water channel (9); a plurality of grooves are provided inside the chromium-zirconium-copper layer (83) and the stainless-steel layer (84); and the chromium-zirconium-copper layer (83) and the stainless-steel layer (84) are pre-formed composite panels and then are processed to form the plurality of grooves inside, wherein the chromium-zirconium-copper layer (83) is configured for heat transfer, and the stainless-steel layer (84) is configured to provide structural strength.

## Patentansprüche

1. Geschlossene V-förmige Spitzwinkelstruktur für eine erste Wand eines Divertors für Tokamak-Fusionsvorrichtungen, umfassend:
ein Target (8);
eine Reflektorplatte (11); und
ein Kühlwasserrohr (7);
wobei das Target (8) und die Reflektorplatte (11) beide eine flache Plattenstruktur aufweisen und jeweils eine Wolframschicht (81), eine Kupferschicht (82), eine Chrom-Zirkonium-Kupfer-Schicht (83), eine Edelstahlschicht (84) und eine Edelstahl-Abdeckplatte (85) umfassen, die nacheinander verbunden sind; wobei die Chrom-Zirkonium-Kupfer-Schicht, die Edelstahlschicht und die Edelstahl-Abdeckplatte (85) kombiniert sind, um einen Kühlkörper zu bilden; wobei die Chrom-Zirkonium-Kupfer-Schicht und die Edelstahlschicht innerhalb des Kühlkörpers einen HyperVapotron-Kühlwasserkanal (9) bilden; und wobei das Kühlwasserrohr (7) mit dem HyperVapotron-Kühlwasserkanal (9) verbunden ist, um einen Kühlwasserkanal zu bilden;
**dadurch gekennzeichnet, dass** das Target (8) und die Reflektorplatte (11) stumpf geschweißt sind, um die geschlossene V-förmige Spitzwinkelstruktur zu bilden, um eine flexible Einstellung und Kontrolle der Plasmaauftreffpunkte zwischen dem Target (8) und der Reflektorplatte (11) zu ermöglichen, um so eine flexible Einstellung der Plasmakonfiguration zu ermöglichen.

2. Geschlossene V-förmige Spitzwinkelstruktur nach Anspruch 1, **dadurch gekennzeichnet, dass** das Target (8) und die Reflektorplatte (11) hinsichtlich Struktur und Parameter jeder Schicht gleich sind, so dass das Target (8) und die Reflektorplatte (11) die gleiche Wärmeübertragungskapazität haben; wobei die Wolframschicht (81) so konfiguriert ist, dass sie dem Plasma ausgesetzt ist; wobei die Kupferschicht (82) als Übergangsschicht konfiguriert ist; wobei die Chrom-Zirkonium-Kupfer-Schicht (83) als Wärmeübertragungsschicht konfiguriert ist; wobei die Edelstahlschicht (84) als Strukturschicht konfiguriert ist; und wobei die Edelstahl-Abdeckplatte (85) als Abdeckplatte für den HyperVapotron-Kühlwasserkanal (9) konfiguriert ist.

3. Geschlossene V-förmige Spitzwinkelstruktur nach Anspruch 1, **dadurch gekennzeichnet, dass** eine Kontaktfläche zwischen der Chrom-Zirkonium-Kupfer-Schicht (83) und der Edelstahlschicht (84) eine gekrümmte Oberfläche in einem Schweißbereich der geschlossenen V-förmigen Spitzwinkelstruktur ist; und wobei an einer Seite der Chrom-Zirkonium-Kupfer-Schicht (83) in dem Kühlkörper der HyperVapotron-Kühlwasserkanal einen Übergang in einer Abfolge von der Chrom-Zirkonium-Kupfer-Schicht, einer Mischschicht von Chrom-Zirkonium-Kupfer und Edelstahl und der Edelstahlschicht erfährt.

4. Geschlossene V-förmige Spitzwinkelstruktur nach Anspruch 1, **dadurch gekennzeichnet, dass** Wolframschichten des Targets und der Reflektorplatte an einer Innenseite der geschlossenen V-förmigen Spitzwinkelstruktur angeordnet sind und an einer Wurzel der geschlossenen V-förmigen Spitzwinkelstruktur entlang einer Übertragungsrichtung einer Plasmakonfigurationslinie einen überlappenden Bereich aufweisen, um sicherzustellen, dass ein Plasmaauftreffpunktbereich vollständig von der Wolframschicht bedeckt ist, damit das Plasma vollständig von der Wolframschicht abgefangen werden kann.

5. Geschlossene V-förmige Spitzwinkelstruktur nach Anspruch 1, **dadurch gekennzeichnet, dass** das Target und die Reflektorplatte durch ein einstufiges Stumpfschweißverfahren stumpfgeschweißt werden, wobei das Stumpfschweißverfahren das Schweißen der Edelstahlschichten des Targets und der Reflektorplatte, das Schweißen der Edelstahl-Abdeckplatte (85) und der Edelstahlschicht, das Schweißen des Kühlwasserrohrs und der Edelstahl-Abdeckplatte (85) und das Schweißen eines Wolfram-Kupfer-Blechs und der Chrom-Zirkonium-Kupfer-Schicht umfasst.

6. Geschlossene V-förmige Spitzwinkelstruktur nach Anspruch 3, **dadurch gekennzeichnet, dass** der Schweißbereich eine Schweißgrenzfläche ist, die durch Stumpfschweißen zwischen Edelstahlschichten des Targets (8) und der Reflektorplatte (11) gebildet wird; wobei die Schweißgrenzfläche einen Vorsprung und eine Vertiefung aufweist, die aufeinander abgestimmt sind; wobei Schweißgrenzflächen zwischen der Edelstahl-Abdeckplatte (85) und der Edelstahlschicht (84) und Schweißgrenzflächen zwischen dem Kühlwasserrohr (7) und der Edelstahl-Abdeckplatte (85) alle so verarbeitet sind, dass sie eine gegenseitig abgestimmte Vorsprung-Vertiefungs-Struktur zum Stumpfschweißen bilden.

7. Geschlossene V-förmige Spitzwinkelstruktur nach Anspruch 1, **dadurch gekennzeichnet, dass** die Edelstahl-Abdeckplatte (85) und die Edelstahlschicht dicht verschweißt sind, um den vollständigen HyperVapotron-Kühlwasserkanal (9) zu bilden; wobei eine Vielzahl von Nuten im Inneren der Chrom-Zirkonium-Kupfer-Schicht (83) und der Edelstahlschicht (84) vorgesehen ist; und wobei die Chrom-Zirkonium-Kupfer-Schicht (83) und die Edelstahlschicht (84) vorgeformte Verbundplatten sind und dann verarbeitet werden, um die Vielzahl von Rillen im Inneren zu bilden, wobei die Chrom-Zirkonium-Kupfer-Schicht (83) für die Wärmeübertragung konfiguriert ist und die Edelstahlschicht (84) konfiguriert ist, um strukturelle Festigkeit bereitzustellen.

## Revendications

1. Structure fermée à angle aigu en forme de V pour une première paroi d'un divertor pour dispositifs de fusion tokamak, comprenant :
une cible (8) ;
une plaque réflectrice (11) ; et
un tuyau d'eau de refroidissement (7) ;
dans laquelle la cible (8) et la plaque réflectrice (11) ont toutes deux une structure de plaque plate, et chacun comprend une couche de tungstène (81), une couche de cuivre (82), une couche de chrome-zirconium-cuivre (83), une couche d'acier inoxydable (84) et une plaque de recouvrement en acier inoxydable (85) connectées en séquence ; la couche de chrome-zirconium-cuivre, la couche d'acier inoxydable et la plaque de recouvrement en acier inoxydable (85) sont combinées pour former un dissipateur thermique ; la couche de chrome-zirconium-cuivre et la couche d'acier inoxydable à l'intérieur du dissipateur thermique forment un canal d'eau de refroidissement HyperVapotron (9) ; et le tuyau d'eau de refroidissement (7) communique avec le canal d'eau de refroidissement de l'HyperVapotron (9) pour former un canal d'eau de refroidissement ;
**caractérisé en ce que** la cible (8) et la plaque réflectrice (11) sont soudées bout à bout pour former la structure fermée à angle aigu en forme de V pour permettre un réglage et un contrôle flexibles de frappe du plasma entre la cible (8) et la plaque réflectrice (11), de manière à permettre un réglage flexible de la configuration du plasma.

2. Structure fermée à angle aigu en forme de V selon la revendication 1, **caractérisée en ce que** la cible (8) et la plaque réflectrice (11) ont la même structure et le même paramètre de chaque couche, de telle sorte que la cible (8) et la plaque réflectrice (11) ont la même capacité de transfert de chaleur ; la couche de tungstène (81) est configurée pour être exposée au plasma ; la couche de cuivre (82) est configurée comme une couche de transition ; la couche de chrome-zirconium-cuivre (83) est configurée comme une couche de transfert de chaleur ; la couche d'acier inoxydable (84) est configurée comme une couche structurelle ; et la plaque de recouvrement en acier inoxydable (85) est configurée comme une plaque de recouvrement pour le canal d'eau de refroidissement de l'HyperVapotron (9).

3. Structure fermée à angle aigu en forme de V selon la revendication 1, **caractérisée en ce qu'**une interface de contact entre la couche de chrome-zirconium-cuivre (83) et la couche d'acier inoxydable (84) est une surface incurvée dans une zone de soudure de la structure fermée à angle aigu en forme de V ; et sur un côté de la couche de chrome-zirconium-cuivre (83) dans le dissipateur thermique, le canal d'eau de refroidissement de l'HyperVapotron subit une transition dans une séquence de la couche de chrome-zirconium-cuivre-une couche mixte de chrome-zirconium-cuivre et d'acier inoxydable-la couche d'acier inoxydable.

4. Structure fermée à angle aigu en forme de V selon la revendication 1, **caractérisée en ce que** les couches de tungstène de la cible et de la plaque réflectrice sont situées sur un côté intérieur de la structure fermée à angle aigu en forme de V et présentent une zone de chevauchement à la racine de la structure fermée à angle aigu en forme de V le long d'une direction de transmission d'une ligne de configuration de plasma, de manière à garantir qu'une zone de point de frappe du plasma est entièrement recouverte par la couche de tungstène pour permettre au plasma d'être complètement intercepté par la couche de tungstène.

5. Structure fermée à angle aigu en forme de V selon la revendication 1, **caractérisée en ce que** la cible et la plaque réflectrice sont soudées bout à bout par un formage par soudage bout à bout en une étape qui comprend le soudage des couches d'acier inoxydable de la cible et de la plaque réflectrice, le soudage de la plaque de recouvrement en acier inoxydable (85) et de la couche d'acier inoxydable, le soudage du tuyau d'eau de refroidissement et de la plaque de recouvrement en acier inoxydable (85) et le soudage d'une feuille de tungstène-cuivre et de la couche de chrome-zirconium-cuivre.

6. Structure fermée à angle aigu en forme de V selon la revendication 3, **caractérisée en ce que** la zone de soudage est une interface de soudage formée par soudage bout à bout entre les couches d'acier inoxydable de la cible (8) et de la plaque réflectrice (11) ; l'interface de soudage présente un bossage et un évidement adaptés l'un à l'autre ; les interfaces de soudage entre la plaque de recouvrement en acier inoxydable (85) et la couche en acier inoxydable (84) et les interfaces de soudage entre le tuyau d'eau de refroidissement (7) et la plaque de recouvrement en acier inoxydable (85) sont toutes traitées pour former une structure bossage-évidement mutuellement adaptée pour le soudage bout à bout.

7. Structure fermée à angle aigu en forme de V selon la revendication 1, **caractérisée en ce que** la plaque de recouvrement en acier inoxydable (85) et la couche en acier inoxydable sont soudées de manière étanche pour former le canal d'eau de refroidissement HyperVapotron complet (9) ; une pluralité de rainures sont prévues à l'intérieur de la couche de chrome-zirconium-cuivre (83) et de la couche d'acier inoxydable (84) ; et la couche de chrome-zirconium-cuivre (83) et la couche d'acier inoxydable (84) sont des panneaux composites préformés puis sont traitées pour former la pluralité de rainures à l'intérieur, dans lequel la couche de chrome-zirconium-cuivre (83) est configurée pour le transfert de chaleur, et la couche d'acier inoxydable (84) est configurée pour fournir une résistance structurelle.
